# EUROPÄISCHE PATENTSCHRIFT

(11) **EP 2 508 115 B1**
(45) Veröffentlichungstag und Bekanntmachung des Hinweises auf die Patenterteilung: **03.06.2020**
(21) Anmeldenummer: 12401048.9
(22) Anmeldetag: 27.03.2012
(51) Int. Cl.: A47L 15/42

(54) **Verfahren zum Betrieb eines Geschirrspülautomaten**
Method for operating a dishwasher
Procédé destiné au fonctionnement d'un automate de lave-vaisselle

(30) Priorität: 07.04.2011 DE 102011001869
(43) Veröffentlichungstag der Anmeldung: 10.10.2012
(73) Patentinhaber: Miele & Cie. KG, 33332 Gütersloh (DE)
(72) Erfinder: Wegener, Dirk, 33649 Bielefeld (DE)

(56) Entgegenhaltungen:
- WO-A1-2008/077970
- WO-A1-2010/040149
- DE-A1- 3 913 355
- DE-A1- 4 004 057
- DE-A1-102008 029 908

## Beschreibung

Die Erfindung betrifft ein Verfahren zum Betrieb eines programmgesteuerten Geschirrspülautomaten mit Sammeltopf, bei dem nach Abschluss eines Spülprogramms Spülflüssigkeit im Sammeltopf verbleibt und dort zum Zwecke der Wiederverwendung bevorratet wird.

Geschirrspülautomaten, auch Geschirrspülmaschinen genannt, sind aus dem Stand der Technik ebenso bekannt, wie Verfahren zu deren Betrieb. Eines gesonderten druckschriftlichen Nachweises bedarf es an dieser Stelle deshalb nicht.

Aus dem Stand der Technik ist es ebenfalls bekannt, Spülflüssigkeit zum Zwecke der Frischwassereinsparung wiederzuverwenden. Typischerweise geschieht dies dadurch, dass mit Abschluss eines Spülprogramms die im Spülraum des Geschirrspülautomaten befindliche Spülflüssigkeit nicht vollends durch Abpumpung entsorgt wird. Ein Teil der Spülflüssigkeit wird vielmehr zurückgehalten und bevorratet. Zu diesem Zweck kann entweder ein hierfür vorgesehener Vorratsbehälter zum Einsatz kommen oder es wird hierfür der vom Geschirrspülautomaten ohnehin bereitgestellte Sammeltopf genutzt.

Mit Beginn eines neues Spülprogramms oder eines neuen Programmzyklusses wird die im Sammeltopf zwischenbevorratete Spülflüssigkeit wiederverwendet. Als zwischen zu speicherende Spülflüssigkeit findet dabei insbesondere eine solche Spülflüssigkeit Verwendung, die einen geringen Verschmutzungsgrad aufweist. Dies trifft insbesondere für die im letzten Programmzyklus verwendete Spülflüssigkeit zu, bei welchem Programmzyklus es sich bevorzugterweise um das Spülprogramm des Klarspülens handelt.

Obgleich sich die Zwischenspeicherung von Spülflüssigkeit zum Zwecke der Wiederverwendung insbesondere unter dem Gesichtspunkt der Energie- und Ressourceneinsparung als vorteilhaft erwiesen hat, gibt es Nachteile. Ein Hauptproblem besteht darin, dass die zwischengespeicherte Spülflüssigkeit verkeimt. Ist die Verunreinigung der zwischengespeicherten Spülflüssigkeit durch beispielsweise Verkeimung, Ansammlung von Bakterien und/oder Algen zu groß, kann es zu einer Kontamination insbesondere des zu reinigenden Geschirrs im Falle der Wiederverwendung kommen. Um diesem Problem zu begegnen sind in der Vergangenheit bereits Vorschläge unterbreitet worden, die allerdings insbesondere den Nachteil eines erhöhten Energiebedarfs mit sich bringen. So ist beispielsweise vorgeschlagen worden, die zwischengespeicherte Spülflüssigkeit aufzuheizen, um biologisches Material, wie beispielsweise Bakterien oder Keime abtöten zu können. Darüber hinaus ist vorgeschlagen worden, die während Temperatur des letzten Spülprogramms eines Programmzyklusses bei erhöhter Temperatur durchzuführen, um so insgesamt eine verringerte Belastung der gesamten im Spülraum des Geschirrspülautomaten befindlichen Spülflotte zu erreichen, so dass in der Konsequenz auch die der Spülflotte entnommene Spülflüssigkeit eine verminderte Belastung mit biologischem Material aufweist.

Die DE 10 2008 029 908 A1 beschreibt ein Verfahren zum Betreiben einer Geschirrspülmaschine mit einem Zwischenspeicher zur Bevorratung und Wiederverwendung von Spülflüssigkeit, bei dem Salzsole zur Hemmung in den Zwischenspeicher eingebracht wird.

Die DE 39 13 355 A1 beschreibt eine Geschirrspülmaschine mit einer Einrichtung zur Zwischenspeicherung von benutzter Spülflüssigkeit, wobei die Dauer der Zwischenspeicherung zeitmäßig erfasst und bei Erreichen einer vorgegebenen Zeitspanne die gespeicherte Spülflüssigkeit durch Abpumpen verworfen wird.

Die DE 40 04 057 A1 offenbart eine Geschirrspülmaschine mit einem Zwischenspeicher zur Bevorratung und Wiederverwendung von Spülflüssigkeit, wobei durch regelmäßige Bestrahlung mit einer UV-Lampe einem Keimwachstum entgegengewirkt wird.

Obgleich sich die vorbeschriebenen Maßnahmen zur Minimierung der Verkeimung der bevorrateten Spülflüssigkeit im alltäglichen Praxiseinsatz bewährt haben, erweisen sie sich doch insofern als nachteilig, als dass sie einen erhöhten Energieverbrauch mit sich bringen, so dass es in der Gesamtbilanz äußerst fraglich ist, ob mit der Zwischenspeicherung von Spülflüssigkeit überhaupt ein energetischer Vorteil erreicht werden kann.

Es ist deshalb ausgehend vom Vorbeschriebenen die Aufgabe der Erfindung, eine gattungsgemäße Verfahrensdurchführung dahingehend zu verbessern, dass eine möglichst weitreichende Ressourceneinsparung auch in der Gesamtbilanz erreicht werden kann.

Zur Lösung dieser Aufgabe wird mit der Erfindung eine Verfahrensdurchführung vorgeschlagen, bei der nach Abschluss eines Spülprogramms Spülflüssigkeit im Sammeltopf verbleibt und dort zum Zwecke der Wiederverwendung bevorratet wird, bei der nach Ablauf einer vorgebbaren Zeitspanne die Temperatur der bevorrateten Menge an Spülflüssigkeit gemessen wird, bei der die gemessene Ist-Temperatur mit einer vorgebbaren Vergleichstemperatur verglichen wird und bei der die im Sammeltopf befindliche Menge an Spülflüssigkeit durch Abpumpen verworfen wird, wenn eine oberhalb der Vergleichstemperatur liegende Ist-Temperatur detektiert wird.

Nach der erfindungsgemäßen Verfahrensdurchführung wird die im Sammeltopf des Geschirrspülautomaten zum Zwecke der Wiederverwendung zurückgehaltene Spülflüssigkeit solange bevorratet, solange eine unerwünscht hohe Belastung mit biologischem Material, beispielsweise Bakterien, Keimen und/oder dergleichen noch nicht eingetreten ist. Als Parameter für die Aufbewahrungsdauer der Spülflüssigkeit dient dabei die Temperatur der Spülflüssigkeit. Dies deshalb, weil die Vermehrung von Bakterien, Keimen und/oder dergleichen temperaturabhängig ist, die Temperatur mithin als physikalisch messbare Größe einen Rückschluss auf die Kontamination der Spülflüssigkeit durch Bakterien, Keime und/oder dergleichen zulässt. Dabei erfolgt die Temperaturmessung nach Ablauf einer vorgebbaren Zeitspanne. Diese Zeitspanne kann sowohl herstellerseitig als auch bedienerseitig vorgebbar sein und beträgt beispielsweise 6 Stunden, 12 Stunden oder 24 Stunden. Andere Zeitvorgaben sind selbstverständlich auch denkbar. Es können auch sich dynamisch verändernde Zeitspannen vorgesehen sein, die sich beispielsweise in Abhängigkeit der Jahreszeit ergeben. So kann die Zeitspanne im Winter, wenn verhältnismäßig niedrige Temperaturen gegeben sind, länger als im Sommer sein, wenn die Temperaturen verhältnismäßig hoch ausfallen.

Nach Ablauf der vorgebbaren Zeitspanne erfolgt erfindungsgemäß eine Temperaturmessung. Liegt die gemessene Temperatur oberhalb einer Referenztemperatur, das heißt oberhalb einer vorgebbaren Vergleichstemperatur, so ist dies gleichbedeutend damit, dass die tatsächliche Belastung mit biologischem Material höher als diejenige in Entsprechung zur Vergleichstemperatur ausfällt. Die zwischengespeicherte Spülflüssigkeit wird in der Konsequenz durch Abpumpen verworfen. Eine Wiederverwendung der Spülflüssigkeit findet nach Ablauf der vorgebbaren Zeitspanne also nicht statt.

Sollte die Temperaturmessung einschließlich der anschließenden Vergleichsbestimmung hingegen ergeben, dass die gemessene Temperatur, das heißt die tatsächliche Temperatur unterhalb der vorgebbaren Vergleichstemperatur liegt, so ist dies gleichbedeutend damit, dass die bevorratete Spülflüssigkeit noch innerhalb der tolerierbaren Belastungsgrenzen liegt, das heißt eine Kontamination mit biologischem Material noch nicht so weit vorangeschritten ist, als dass eine Verwerfung der Spülflüssigkeit stattfinden müsste. In der Konsequenz findet ein Abpumpen der Spülflüssigkeit nicht statt, das heißt die bevorratete Spülflüssigkeit verbleibt im Sammeltopf und steht nach wie vor für eine Wiederverwendung zur Verfügung.

Eine Temperaturmessung findet erneut nach Ablauf einer weiteren Zeitspanne statt, die ebenfalls vorgebbar ist und genausolange andauern kann wie die erste vorgebbare Zeitspanne. Es sind aber insbesondere auch kürzere Zeitspannen möglich. Sollte nach Ablauf der zweiten Zeitspanne wiederum festgestellt werden, dass die tatsächliche Temperatur unterhalb einer vorgebbaren Vergleichstemperatur liegt, bleibt die Spülflüssigkeit weiter bevorratet. Andernfalls wird sie durch Abpumpen verworfen.

Die erfindungsgemäße Verfahrensdurchführung wird wiederholt hintereinander durchgeführt, und zwar solange, bis eine Kontamination der Spülflüssigkeit auf indirektem Wege durch Temperaturmessung detektiert wird, dass ein Verwerfen der Spülflüssigkeit durch Abpumpen stattfindet.

Solange sich bevorratete Spülflüssigkeit im Sammeltopf des Geschirrspülautomaten befindet, findet bei Start eines neuen Programmzyklusses eine automatische Wiederverwendung statt. Mit der erfindungsgemäßen Verfahrensdurchführung wird also sichergestellt, dass zu stark belastete Spülflüssigkeit aus dem Geschirrspülautomaten entfernt wird. Solange eine solche Entfernung noch nicht stattgefunden hat, findet mit Beginn eines neuen Spülprogramms eine Verwendung der bevorrateten und noch nicht verworfenen Spülflüssigkeit statt. Insofern können "Vielspüler" besonders viel Spülflüssigkeit einsparen und "Wenigspüler" haben keinen hygienischen Nachteil.

Gemäß einer ergänzenden und/oder alternativen Ausgestaltung der Erfindung kann vorgesehen sein, dass die Temperatur der bevorrateten Menge an Spülflüssigkeit gemessen und hierauf basierend die maximale Verweildauer der Spülflüssigkeit im Sammeltopf bestimmt wird, wobei die Spülflüssigkeit durch Abpumpen verworfen wird, wenn die tatsächliche Verweildauer der Spülflüssigkeit im Sammeltopf der vorbestimmten maximalen Verweildauer entspricht.

Gemäß dieser Verfahrensdurchführung wird auf Basis der erfolgten Temperaturmessung eine Prognose über die maximal mögliche Verweildauer erstellt. Diese Prognose kann anhand von Erfahrungswerten durchgeführt werden, die der Vergleichsberechnung in Form entsprechender Daten zur Verfügung stehen. Dabei können diese Daten entweder herstellerseitig vorgegeben sein und/oder sich aufgrund einer bestimmungsgemäßen Verwendung des Geschirrspülautomaten ergeben.

Es ist beispielsweise eine Verfahrensdurchführung denkbar, wonach zunächst einmal nach Ablauf einer vorgebbaren Zeitdauer eine Temperaturmessung stattfindet. Liegt die gemessene Temperatur unterhalb einer vorgebbaren Vergleichstemperatur, erfolgt also kein Abpumpen der Spülflüssigkeit, so kann anhand der gemessenen Temperatur die noch mögliche Verweildauer der Spülflüssigkeit errechnet werden. Nach Ablauf dieser errechneten Verweildauer erfolgt ohne weitere Temperaturmessung ein Verwerfen der Spülflüssigkeit durch Abpumpen. Alternativ kann nach Ablauf der zuvor berechneten Verweildauer auch wieder eine Temperaturmessung stattfinden, die dann entweder im Ergebnis ein Verwerfen der Spülflüssigkeit oder eine Neuberechnung einer sich anschließenden weiteren Verweildauer zur Folge hat.

Die erfindungsgemäße Verfahrensdurchführung kann sich beispielsweise wie folgt ergeben:
Im Zuge einer bestimmungsgemäßen Verwendung findet als letztes Spülprogramm eines Programmzyklus ein Klarspülen statt. Zur Speicherung des Klarspülwassers wird das Speichervolumen unterhalb des Flächensiebes genutzt, das vom Sammeltopf bereitgestellt wird. Dabei sind der Sammeltopf und das hiervon bereitgestellte Volumen in Folge der Abdeckung durch das Flächensieb für einen Verwender nicht sichtbar. Das vom Sammeltopf bereitgestellte Volumen kann beispielsweise bis zu zwei Liter Klarspülwasser bevorraten.

Um hygienischen Problemen insbesondere durch biologische Kontamination vorzubeugen, wird nach Ablauf einer vorbestimmten Zeitspanne von zum Beispiel 24 Stunden das bevorratete Klarspülwasser automatisch verworfen. Hierfür schaltet sich der Geschirrspülautomat automatisch ein und es findet ein Abpumpen des zwischengespeicherten Klarspülwassers durch die Ablaufpumpe des Geschirrspülautomaten statt. In einem vom Geschirrspülautomaten bereitgestellten Informationsdisplay kann während des Abpumpvorgangs eine Meldung angezeigt werden, wie zum Beispiel "Restwasser wird abgepumpt".

Der Abpumpzeitpunkt kann je nach Raum- und/oder Klarspülwassertemperatur variabel gestaltet werden. Hierfür schaltet sich der Geschirrspülautomat zum Beispiel alle 12 Stunden ein und ermittelt die Raum- und/oder Wassertemperatur, woraufhin dann mittels einer Vergleichsschaltung entschieden werden kann, ob ein Abpumpen des zwischengespeicherten Klarspülwassers erfolgen soll oder nicht. Dabei kann beispielsweise im Sommer bei tendenziell höheren Raumtemperaturen eine Temperaturmessung sowie gegebenenfalls ein Abpumpen schon nach 12 Stunden, im Winter bei tendenziell niedrigen Temperaturen erst nach 36 Stunden oder 48 Stunden stattfinden.

Um eine Reinigung des den Sammeltopf abdeckenden Flächensiebes für einen Nutzer zu ermöglichen, kann nach einer festgelegten Anzahl von Programmabläufen, beispielsweise von 20, 30 oder 40 Programmabläufen, das Klarspülwasser ohne Bevorratung verworfen und dem Benutzer über eine dafür vorgesehene Anzeige die Aufforderung zur Siebkontrolle angezeigt werden. Durch diese Maßnahme wird verhindert, dass ein Nutzer das Flächensieb aus einem noch mit Klarspülwasser gefüllten Sammeltopf entnehmen muss. Ein Aufschwimmen von Restpartikeln aus der Siebkombination mit der Gefahr einer Verstopfung der Sprüharmdüsen beim nächsten Programmstart wird somit vermieden.

Insgesamt können mit der erfindungsgemäßen Verfahrensdurchführung folgende Vorteile erreicht werden:
Es wird ein intelligentes Wassermanagement bereitgestellt, das eine effektive Restwassernutzung gestattet. Dabei ist die erfindungsgemäße Verfahrensdurchführung im Unterschied zu aus dem Stand der Technik bekannten Verfahren weniger energieaufwendig. Es muss insbesondere keine Energie zur Temperierung der bevorrateten Spülflüssigkeit aufgewandt werden. Darüber hinaus ist die erfindungsgemäße Verfahrensdurchführung auch deswegen hygienisch unbedenklich, weil der Sammeltopf im Zuge einer ordnungsgemäßen Verwendung des Geschirrspülautomaten immer wieder gespült und gereinigt wird. Im Übrigen wird zwischengespeicherte Spülflüssigkeit automatisch verworfen, bevor Gerüche oder Hygieneprobleme durch Verkeimungen auftreten.

Da eine Bevorratung der Spülflüssigkeit im ohnehin vorhandenen Sammeltopf stattfindet, können im Unterschied zum Stand der Technik auch etwaige Zusatzspeicher in Form von Vorratsbehältern vermieden werden. Insbesondere Platzprobleme werden so vermieden.

Von Vorteil der erfindungsgemäßen Verfahrensdurchführung ist ferner, dass im Programmablauf des Geschirrspülautomaten kein zusätzliches Reinigungsprogramm oder kein zusätzlicher Reinigungsteilabschnitt vorgesehen werden muss, da sich der Sammeltopf automatisch im Spülbetrieb reinigt.

Das erfindungsgemäße Verfahren stellt nicht zuletzt ein kostengünstiges Gesamtkonzept zur Verfügung, da keine weiteren Bauteile in Form von zusätzlichen Speichern, Umschaltventilen und/oder dergleichen benötigt werden. Auch zusätzliche elektrische Einrichtungen, wie zum Beispiel Heizung oder dergleichen sind nicht erforderlich.

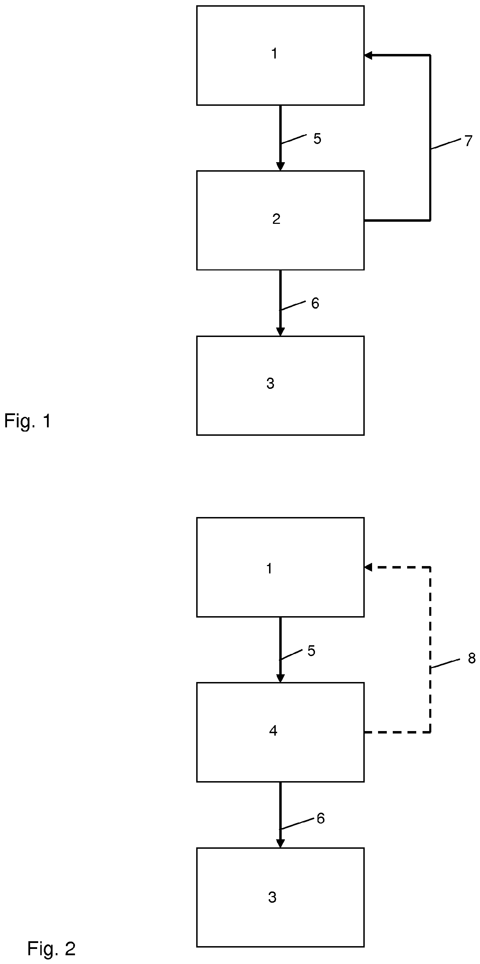

Weitere Merkmale und Vorteile der Erfindung ergeben sich aus der nachfolgenden Beschreibung anhand der Figuren. Dabei zeigen die Figuren 1 und 2 jeweils in rein schematischer Blockdarstellung eine nach der Erfindung mögliche Verfahrensdurchführung.

Nach der erfindungsgemäßen Verfahrensdurchführung ist vorgesehen, dass nach Abschluss eines Spülprogramms Spülflüssigkeit im Sammeltopf verbleibt. Bei diesem Spülprogramm kann es sich beispielsweise um den regelmäßig als letztes Spülprogramm eines Programmzyklusses stattfindenden Klarspülvorgang handeln. Dabei wird zum Ende des Klarspülvorgangs nicht ein Vollabpumpen sondern nur ein Teilabpumpen der Spülflüssigkeit durchgeführt, so dass in der Konsequenz ein Restvolumen im Sammeltopf verbleibt. Je nach Größe des Sammeltopfes kann diese Restwassermenge beispielsweise 2 Liter betragen.

Dabei bringt das Teilabpumpen zum Zwecke des Verbleibs einer Restwassermenge im Sammeltopf den weiteren Vorteil mit sich, dass im Wesentlichen nur die im Vergleich saubere Teilmenge des Klarspülwassers im Sammeltopf verbleibt, da der abgeschiedene Restschmutz im Filtersystem vor der Ablaufpumpe mit der abgeförderten Teilmenge abgepumpt wird. Für einen Nutzer ist im Übrigen die im Sammeltopf verbleibende Restwassermenge nicht sichtbar, da der Sammeltopf mit einem Flächensieb abgedeckt ist.

Nach einer festgelegten Zeit, das heißt nach Ablauf einer vorgebbaren Zeitspanne von zum Beispiel 12 Stunden schaltet sich der Geschirrspülautomat automatisch ein und es findet eine Messung der Temperatur der im Sammeltopf bevorrateten Menge an Spülflüssigkeit statt. Im Blockdiagramm nach Fig. 1 ist diese Temperaturmessung durch das Bezugszeichen 1 dargestellt.

Nach erfolgter Temperaturmessung 1 wird in einer Vergleichsschaltung die gemessene Temperatur mit einer vorgebbaren Vergleichstemperatur verglichen. Dieser Temperaturvergleich findet gemäß dem Blockdiagramm nach Fig. 1 bei 2 statt. Dabei erfolgt die Datenübergabe, das heißt die Übergabe der gemessenen Temperatur an die Vergleichsschaltung gemäß dem Pfeil 5 nach Fig. 1 statt.

Ergibt der Temperaturvergleich 2, dass die gemessene Ist-Temperatur oberhalb der Vergleichstemperatur liegt, so wird die zwischengespeicherte Spülflüssigkeit durch Abpumpen verworfen, was im Blockdiagramm nach Fig. 1 durch das Bezugszeichen 3 gekennzeichnet ist. Die Ansteuerung der Pumpe erfolgt in Entsprechung des Pfeils 6 nach Fig. 1.

Ergibt die Vergleichsbestimmung indes, dass die gemessene Ist-Temperatur unterhalb der vorgebbaren Vergleichstemperatur liegt, so erfolgt kein Abpumpen der zwischengespeicherten Spülflüssigkeit und es wird in Entsprechung des Pfeils 7 nach Ablauf einer weiteren vorgebbaren Zeitdauer eine erneute Temperaturmessung 1 durchgeführt.

Wird innerhalb der vorgebbaren Zeitdauer, in der sich noch eine Restwassermenge im Sammeltopf befindet, ein neuer Programmablauf gestartet, so erfolgt kein Abpumpen der im Sammeltopf befindlichen Restwassermenge, sondern es findet vielmehr ein Frischwassereinlauf bis zum Erreichen der zur Programmdurchführung erforderlichen Mindestwassermenge statt, wobei der benötigte Frischwassereinlauf um die Menge an bevorratetem Restwasser verringert ist. Wenn also für einen Programmstart eine Mindestmenge von 3 Liter Wasser benötigt wird, so ist bei einem Sammeltopfvolumen von 2 Litern ein Frischwassereinlauf von nur 1 Liter notwendig.

Der weitere Verfahrensablauf erfolgt dann in Entsprechung des benutzerseitig ausgewählten Programmablaufs.

Eine Alternative und/oder ergänzende Verfahrensdurchführung ist in Fig. 2 gezeigt. Danach findet bei 1 in der schon vorbeschriebenen Weise eine Temperaturmessung statt. Die gemessene Ist-Temperatur wird gemäß Pfeil 5 einer Verweildauerberechnung 4 zugrundegelegt, die dazu dient, anhand der gemessenen Ist-Temperatur die maximal mögliche Verweildauer der Spülflüssigkeit im Sammeltopf zu bestimmen. Dabei wird nach Ablauf dieser vorberechneten Verweildauerzeit die Spülflüssigkeit durch Abpumpen automatisch verworfen, was im Blockdiagramm mit 3 gekennzeichnet ist. Dabei erfolgt die Signalvermittlung an die zum Abpumpen vorgesehene Ablaufpumpe in Entsprechung des Pfeils 6.

Dabei kann gemäß einer Verfahrensabwandlung auch vorgesehen sein, dass in Entsprechung des nur gestrichelt dargestellten Pfeils 8 nach Ablauf der zuvor berechneten Verweildauer eine erneute Temperaturmessung 1 stattfindet, so dass gegebenenfalls eine neue sich an die erste Verweildauer anschließende zweite Verweildauer berechnet werden kann.

## Patentansprüche

1. Verfahren zum Betrieb eines programmgesteuerten Geschirrspülautomaten mit Sammeltopf, bei dem nach Abschluss eines Spülprogramms Spülflüssigkeit im Sammeltopf verbleibt und dort zum Zwecke der Wiederverwendung bevorratet wird, bei dem nach Ablauf einer vorgebbaren Zeitspanne die Temperatur der bevorrateten Menge an Spülflüssigkeit gemessen wird (1), bei dem die gemessene Ist-Temperatur mit einer vorgebbaren Vergleichstemperatur verglichen wird (2) und bei dem die im Sammeltopf befindliche Menge an Spülflüssigkeit durch Abpumpen verworfen wird (3), wenn eine oberhalb der Vergleichstemperatur liegende Ist-Temperatur detektiert wird.

2. Verfahren nach Anspruch 1,
**dadurch gekennzeichnet,**
**dass** die im Sammeltopf befindliche Menge an Spülflüssigkeit weiter bevorratet wird, wenn eine unterhalb der Vergleichstemperatur liegende Ist-Temperatur detektiert wird.

3. Verfahren nach Anspruch 1 oder 2,
**dadurch gekennzeichnet,**
**dass** als Zeitspanne 12 Stunden gewählt werden.

4. Verfahren nach einem der vorhergehenden Ansprüche,
**dadurch gekennzeichnet,**
**dass** eine wiederholte Temperaturmessung (1) durchgeführt wird.

5. Verfahren nach einem der vorhergehenden Ansprüche,
**dadurch gekennzeichnet,**
**dass** die Temperaturmessung (1) automatisiert erfolgt.

6. Verfahren nach einem der vorhergehenden Ansprüche,
**dadurch gekennzeichnet,**
**dass** auf Basis der gemessenen Ist-Temperatur eine mögliche Verweildauer der Spülflüssigkeit im Sammeltopf bestimmt wird (4).

7. Verfahren nach Anspruch 6,
**dadurch gekennzeichnet,**
**dass** die im Sammeltopf befindliche Menge an Spülflüssigkeit durch Abpumpen verworfen wird (3), wenn die tatsächliche Verweildauer der Spülflüssigkeit im Sammeltopf einer vorbestimmten Verweildauer entspricht.

8. Verfahren nach einem der vorhergehenden Ansprüche,
**dadurch gekennzeichnet,**
**dass** bei Start eines neuen Spülprogramms die im Sammeltopf befindliche Menge an Spülflüssigkeit mit Frischwasser zur Erreichung einer für die Durchführung des Spülprogramms erforderlichen Mindestmenge an Spülflüssigkeit aufgefüllt wird.

## Claims

1. Method for operating a program-controlled automatic dishwasher having a collecting vessel, wherein dishwashing liquid remains in the collecting vessel after the end of a washing program and is stored there for reuse, wherein the temperature of the stored amount of dishwashing liquid is measured (1) after a predeterminable period of time, wherein the measured actual temperature is compared (2) with a predeterminable comparison temperature, and wherein the amount of dishwashing liquid in the collecting vessel is discarded (3) by pumping out if an actual temperature above the comparison temperature is detected.

2. Method according to claim 1, **characterised in that** the amount of dishwashing liquid in the collecting vessel is stored further if an actual temperature below the comparison temperature is detected.

3. Method according to either claim 1 or claim 2, **characterised in that** 12 hours are selected as the period of time.

4. Method according to any of the preceding claims, **characterised in that** another temperature measurement (1) is carried out.

5. Method according to any of the preceding claims, **characterised in that** the temperature measurement (1) is automated.

6. Method according to any of the preceding claims, **characterised in that** a possible residence time of the dishwashing liquid in the collecting vessel is determined on the basis of the measured actual temperature (4).

7. Method according to claim 6, **characterised in that** the amount of dishwashing liquid in the collecting vessel is discarded (3) by pumping out if the actual residence time of the dishwashing liquid in the collecting vessel corresponds to a predetermined residence time.

8. Method according to any of the preceding claims, **characterised in that** at the start of a new washing program, fresh water is added to the amount of dishwashing liquid in the collecting vessel in order to achieve a minimum amount of dishwashing liquid required for carrying out the washing program.

## Revendications

1. Procédé pour faire fonctionner un lave-vaisselle automatique commandé par programme comprenant un bac collecteur, dans lequel, après l'achèvement d'un programme de lavage, du liquide de lavage reste dans le bac collecteur et y est stocké en vue d'une réutilisation, dans lequel, après l'écoulement d'une durée prédéfinie, la température de la quantité de liquide de lavage stockée est mesurée (1), dans lequel la température réelle mesurée est comparée (2) à une température de référence prédéfinie, et dans lequel la quantité de liquide de lavage dans le bac collecteur est éliminée par pompage (3) lorsqu'une température réelle supérieure à la température de référence est détectée.

2. Procédé selon la revendication 1, **caractérisé en ce que** la quantité de liquide de lavage dans le bac collecteur est en outre stockée lorsqu'une température réelle inférieure à la température de référence est détectée.

3. Procédé selon la revendication 1 ou 2, **caractérisé en ce que** 12 heures sont choisies comme durée.

4. Procédé selon l'une des revendications précédentes, **caractérisé en ce qu'**une mesure répétée de la température (1) est effectuée.

5. Procédé selon l'une des revendications précédentes, **caractérisé en ce que** la mesure de la température (1) est automatisée.

6. Procédé selon l'une des revendications précédentes, **caractérisé en ce que** le temps de séjour possible du liquide de lavage dans le bac collecteur est déterminé (4) sur la base de la température réelle mesurée.

7. Procédé selon la revendication 6, **caractérisé en ce que** la quantité de liquide de lavage dans le bac collecteur est éliminée (3) par pompage lorsque le temps de séjour réel du liquide de lavage dans le bac collecteur correspond à un temps de séjour prédéfini.

8. Procédé selon l'une des revendications précédentes, **caractérisé en ce que**, lorsqu'un nouveau programme de lavage est lancé, la quantité de liquide de lavage dans le bac collecteur est complétée par de l'eau douce afin d'obtenir une quantité minimale de liquide de lavage requise pour réaliser le programme de lavage.
